# EUROPÄISCHE PATENTSCHRIFT

(11) **EP 2 392 539 B1**
(45) Veröffentlichungstag und Bekanntmachung des Hinweises auf die Patenterteilung: **19.12.2012**
(21) Anmeldenummer: 11004409.6
(22) Anmeldetag: 30.05.2011
(51) Int. Cl.: B66F 9/075, B60K 1/04

(54) **Griffelement für ein bewegliches Verkleidungsteil an einem Flurförderzeug**
Handle element for a cover part of an industrial truck
Elément de poignée pour un élément d'habillage sur un chariot de manutention

(30) Priorität: 01.06.2010 DE 102010022341
(43) Veröffentlichungstag der Anmeldung: 07.12.2011
(73) Patentinhaber: Jungheinrich Aktiengesellschaft, 22047 Hamburg (DE)
(72) Erfinder: Güzel, Mustafa, 22846 Norderstedt (DE)
(74) Vertreter: Hauck Patent- und Rechtsanwälte

(56) Entgegenhaltungen:
- EP-A1- 1 205 424
- EP-A1- 1 930 288
- DE-U1- 20 105 883
- DE-U1-202008 012 144

## Beschreibung

Die vorliegende Erfindung betrifft ein Griffelement für ein bewegliches Verkleidungsteil an einem Flurförderzeug.

Flurförderzeuge besitzen in der Regel bewegliche Verkleidungsteile, beispielsweise eine verschließbare Batteriehaube, mit der die Batterieträgereinheit des Flurförderzeugs verschlossen werden kann. Es ist bekannt, zum Öffnen der Batterichaube an dieser mindestens einen Griff vorzusehen, mit dessen Hilfe die Batteriehaube geöffnet werden kann. Es ist bekannt, hierzu Bügelgriffe einzusetzen, die direkt durch die Verkleidung geschraubt werden können. Ferner ist bekannt, an dem Verkleidungsteil eine geprägte Griffmulde vorzusehen, mit der die Haube geöffnet werden kann. Neben der Anbringung von Griffen an dem Verkleidungsteil ist ferner bekannt, an der Verkleidung eine Klemmleiste für Arbeitspapiere vorzusehen. Diese Klemmleiste ist aus ergonomischen Gründen für den Benutzer gut sichtbar an der Fahrzeugverkleidung montiert. Bisher wurden bei Flurförderzeugen der Griff und die Klemmleiste an unterschiedlichen Positionen der Fahrzeugverkleidung angebracht.

EP 1 205 424 A1 betrifft ein Flurförderzeug mit einem Batterieblock, der in einem Batteriefach angeordnet ist, wobei das Batteriefach mittels eines Batteriefachdeekels verschließbar ist, der zwischen einer Öffnungsstellung und einer Schließstellung eine auf den Batterieblock wirkende Klemmkraft erzeugt. Ein Mittel (Gasfeder) zum Erzeugen einer den Battericfachdeckel in die Öffnungsstellung und in die Schließstellung beaufschlagende Kraft ist vorgesehen. Das Mittel steht mit dem Batteriefachdeckel und dem Batteriefach in Wirkverbindung.

DE 201 05 883 U1 beschreibt eine Vorrichtung zur Fixierung einer Batterie in einer Batterieaufnahme eines Flurförderzeuges, mit einer an einer Außenwand der Batterieaufnahme schwenkbar gelagerten Hebeleinrichtung, die eine mit einem fahrzeugfesten Abschnitt zusammenwirkende Spanneinrichtung trägt, wobei die Hebeleinrichtung in der vorgespannten Position ein oder mehrere Andrückclemente soweit in die Batterieaufnahme drückt, dass sie unter Kraft an der Außenwandung einer eingesetzten Batterie oder eines Batterietroges anliegen.

EP 1 930 288 A1 betrifft Flurförderzeug, in dessen Rahmen ein Batterieträger angeordnet ist, in den ein Batterieblock hinein- oder aus diesem heraus bewegbar ist, wobei eine zwei zusammenwirkende Hebel aufweisende Verriegelungsvorrichtung vorgesehen ist, welche den Batterieblock im eingebauten Zustand gegenüber dem Rahmen bzw. einem Batterieträger lösbar verriegelt. Die Vorrichtung zum Verriegeln des Batterieblocks weist mindestens einen ersten Hebel auf, der um eine fahrzeugfeste Achse gelagert ist sowie mindestens einen zweiten Hebel, der am ersten Hebel schwenkbar gelagert und so ausgerührt ist, dass er mindestens eine Wandfläche des Batterieblocks mit Hilfe mindestens eines Puffers klemmend erfasst.

Der Erfindung liegt die Aufgabe zugrunde, ein Griffelement für ein bewegliches Verkleidungsteil an einem Flurförderzeug bereitzustellen, das für einen Benutzer des Flurförderzeugs ergonomisch günstig ausgebildet ist und dessen Montage erleichtert ist.

Erfindungsgemäß wird die Aufgabe durch einen Griff mit den Merkmalen aus Anspruch 1 gelöst. Vorteilhafte Ausgestaltungen bilden den Gegenstand der Unteransprüche.

Das erfindungsgemäße Griffelement besitzt einen Griff, der zwei Schenkel und einen zwischen dem Schenkel gehaltenen Griffabschnitt aufweist. Ferner besitzt das erfindungsgemäße Griffelement eine Grundplatte, die eine bewegliche Klemmschiene aufweist. Die bewegliche Klemmschiene erstreckt sich zwischen den Schenkeln des Griffs und besitzt eine federvorgespannte Klemmposition, in der blattförmige Gegenstände zwischen die Klemmschiene und die Grundplatte klemmbar sind. Erfindungsgemäß sind der Griff mit der Klemmleiste oder der Grundplatte zu einer Baugruppe verbunden. Bei dem erfindungsgemäßen Griffelement wird einerseits sichergestellt, dass sich sowohl der Griff als auch die Klemmleiste in einer ergonomisch günstigen Position an der Verkleidung des Flurförderzeugs befinden. Zum einen erlaubt die Zusammenfassung von zwei der drei Bestandteile des Griffelements eine vereinfachte Montage. In der Ausgestaltung, in der der Griff mit der Klemmleiste zu einer Baugruppe verbunden ist, ist es für die Montage lediglich erforderlich, die Klemmleiste mit der Grundplatte zu verbinden und die Grundplatte an der Verkleidung zu befestigen. In der Ausgestaltung, in der der Griff der Grundplatte zu einer Baugruppe verbunden ist, ist es lediglich erforderlich, die Klemmschiene mit der Grundplatte zu verbinden und diese an der Fahrzeugsverkleidung zu befestigen. Hierdurch wird der Ablauf der Montage deutlich vereinfacht und eine ergonomisch günstige Position an dem Verkleidungsteil kann sowohl für den Griff als auch für die Klemmschiene verwendet werden.

In einer bevorzugten Ausgestaltung ist der Griff einstückig mit der Klemmschiene ausgebildet. Hierdurch entfällt der Arbeitsschritt, den Griff mit der Klemmleiste zu verbinden.

In einer alternativen Ausgestaltung ist der Griff einstückig mit der Grundplatte ausgebildet, so dass die so gebildete Baugruppe nach Befestigung der Klemmleiste an der Fahrzeugverkleidung montiert werden kann.

In einer bevorzugten Ausgestaltung ist das bewegliche Verkleidungsteil eine Haube für ein Batteriefach oder für eine Batterieträgereinheit. Insbesondere bei deichselgeführten Fahrzeugen findet sich die Batterieträgereinheit in dem Antriebskörper an einer für den Fahrer gut einsehbaren Position, die geeignet ist, um Arbeitspapiere gut sichtbar zu halten.

In einer zweckmäßigen Ausgestaltung ist die Grundplatte über Befestigungsmittel mit dem Verkleidungsteil verbunden. Als Befestigungsmittel können Schrauben, aber auch Klippverbindungen vorgesehen sein.

In einer zweckmäßigen Ausgestaltung ist die Klemmleiste über ein Federelement mit der Grundplatte verbunden. Das Federelement kann hierbei beispielsweise aus einem länglichen Metallstreifen bestehen, der in seiner Längsrichtung abgewinkelt ist. Die so gebildeten Schenkel können jeweils mit der Klemmleiste oder der Grundplatte beispielsweise formschlüssig verbunden sein. Auf diese Weise ist das Klemmelement mit Hilfe des Federelements an der Grundplatte befestigt.

In einer zweckmäßigen Ausgestaltung ist die Klemmleiste aus Metall hergestellt. Bevorzugt handelt es sich hierbei um ein Aluminium-Strangpress-Profil. Die Grundplatte ist bevorzugt aus Kunststoff hergestellt.

Eine bevorzugte Ausführungsform der Erfindung wird nachfolgend anhand der Figuren näher erläutert. Es zeigt:
- Fig. 1: einen deichselgeführten Hochhubwagen in einer perspektivischen Ansicht von schräg vom,
- Fig. 2: eine vergrößerte Ansicht des Details A aus Fig. 1,
- Fig. 3: das Flurförderzeug aus Fig. 1 mit geöffneter Batteriehaube,
- Fig. 4: das Flurförderzeug aus Fig. 1 mit geschlossener Batteriehaube,
- Fig. 5: ein Griffelement in einer Ansicht von vorne,
- Fig. 6: das Griffelement aus Fig. 5 in einer Ansicht von oben,
- Fig. 7: das Griffelement aus Fig. 5 in einer Ansicht von der Seite bei geschlossenem Klemmprofil,
- Fig. 8: das Griffelement aus Fig. 5 in einer Ansicht von der Seite bei geöffnetem Klemmprofil und
- Fig. 9: das Griffelement aus Fig. 5 in einer perspektivischen Ansicht von der Seite.

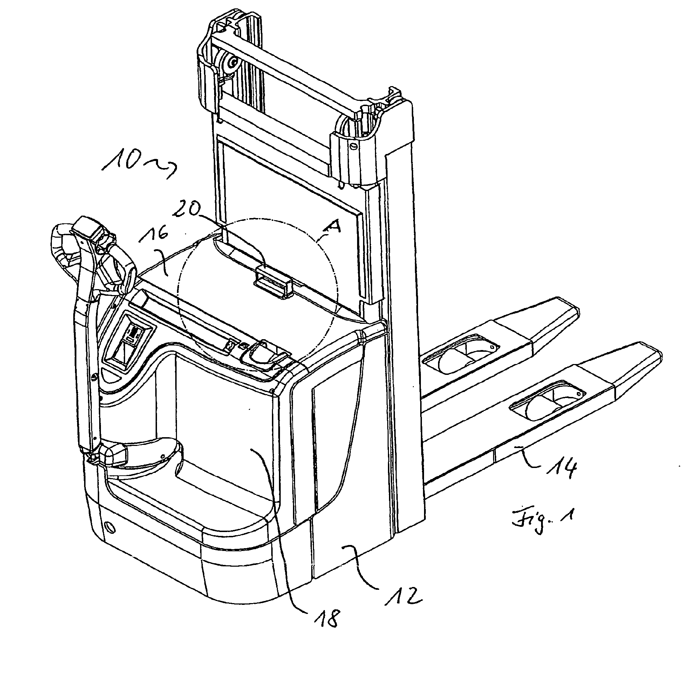

Fig. 1 zeigt einen deichselgeführten Hochhubwagen 10, der ein Antriebsteil 12 und ein Lastteil 14 besitzt. Das Antriebsteil 12 weist eine Batterieträgereinheit (nicht dargstellt) auf. Die Batterieträgereinheit ist durch eine Batteriehaube 16 nach oben verschlossen. Das Antriebsteil 12 besitzt deichselseitig eine Verkleidungsschürze 18, die an die Batteriehaube 16 angrenzt. Mittig auf der zum Lastteil 14 weisenden Seite der Batteriehaube 16 ist ein Griffelement 20 angeordnet.

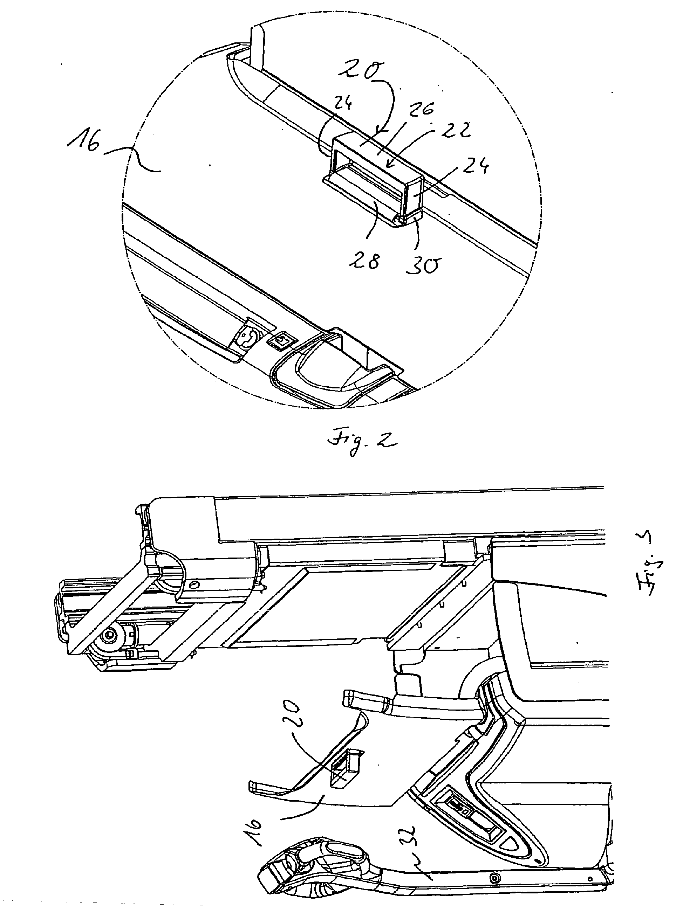

Fig. 2 zeigt einen Ausschnitt A aus Fig. 1 mit der Batteriehaube 16 und dem Griffelement 20. Wie in Fig. 2 zu erkennen, besteht das Griffelement 20 aus einem bügelförmigen Griff 22, der zwei Schenkel 24 und einen Griffabschnitt 26 besitzt. Zwischen den Schenkeln 24 ist eine Klemmschiene 28 angeordnet, die mit einer Grundplatte 30 zusammenwirkt.

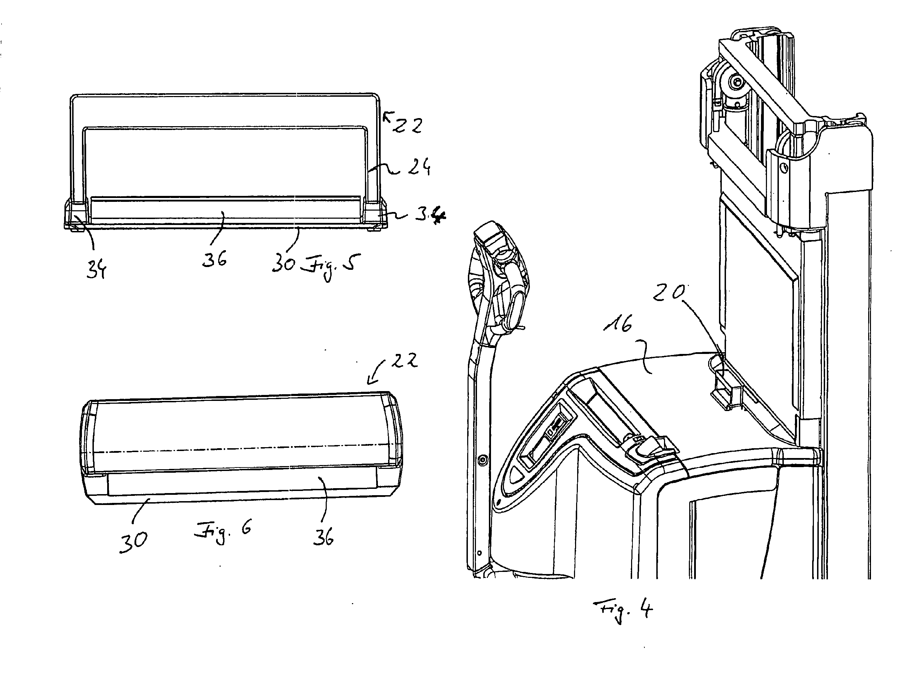

Fig. 3 zeigt das Flurförderzeug aus Fig. 1 mit geöffneter Batteriehaube 16, während Fig. 4 die geschlossene Batteriehaube 16 darstellt. Beachtet man die leicht außermittig angeordnete Position der Deichsel 32, so wird deutlich, dass die Position des Griffelements 20 besonders gut dafür geeignet ist, um die Batteriehaube 16 zu öffnen. Gleichzeitig zeigen die Fign. 3 und 4, dass eine die Deichsel 32 führende Person stets einen freien Blick auf die Batteriehaube 16 und auf etwaige an dem Griff 20 eingeklemmte Arbeitspapiere hat.

Die Fign. 5 bis 9 zeigen eine Ausgestaltung des Griffelements, bei der der Griff 22 mit der Grundplatte 30 verbunden ist. Der Griff 22 kann beispielsweise mit der Grundplatte 30 einstückig ausgebildet sein. Alternativ ist es auch möglich, den Griff 22 mit der Grundplatte 30 zu verkleben oder in sonstiger Weise miteinander zu verbinden.

In der dargestellten Ausführungsform gemäß Fig. 5 besitzt die Grundplatte im Bereich der Verbindung mit den Schenkeln 24 des Griffs jeweils einen Vorsprung 34. Zwischen den Vorsprüngen 34 ist die Klemmschiene 36 angeordnet.

Wie aus der Draufsicht in Fig. 6 ersichtlich, geht die Klemmschiene 36 über den Griff 22 hinaus. Auch die Grundplatte 30 steht seitlich über dem Griff 22 vor und über die Klemmleiste 36, so dass diese mit der Oberseite der Grundplatte 30 zusammenwirkt.

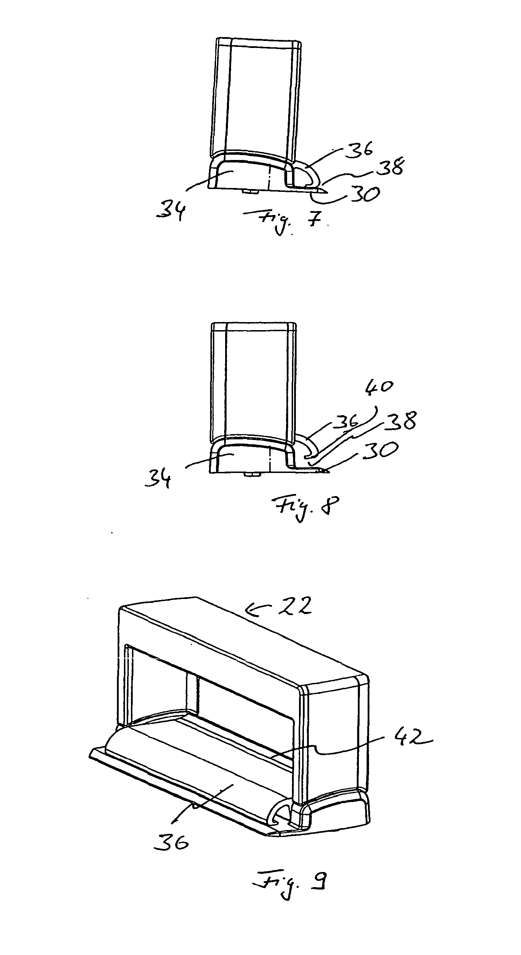

Die Fign. 7 und 8 zeigen das Griffelement in einer Ansicht von der Seite. Deutlich zu erkennen ist der höckerartig ausgebildete Vorsprung 34 an der Grundplatte 30. Fig. 7 zeigt die Klemmschiene 36 in ihrer klemmenden Position, in der das freie Ende der Klemmschiene 36 mit einem flachen Anlageabschnitt 38 mit der Grundplatte 30 zusammenwirkt. Fig. 8 zeigt die geöffnete Position der Klemmschiene 36 in der der Anlageabschnitt 38 der Grundplatte 30 freigegeben ist. Um den Klemmdruck der Klemmschiene möglichst gleichmäßig zu verteilen, besitzt die Klemmschiene 36 an ihrem freien Ende einen abgebogenen Bereich 40, der eine Klemmfläche ohne scharfe Kanten bildet.

Fig. 9 zeigt das Griffelement in einer perspektivischen Ansicht von schräg vorne. Deutlich zu erkennen ist, dass die Profilschiene 36 an ihrem unter dem Griff angeordneten Ende eine nach oben gewölbte Kante 42 besitzt, die für ein Anheben der Klemmleiste leicht zum Griffelement hin geneigt ist.

## Patentansprüche

1. Griffelement für ein bewegliches Verkleidungsteil an einem Flurförderzeug (10) mit einem Griff (20), der zwei Schenkel (24) und einen zwischen den Schenkeln gehaltenen Griffabschnitt (26) aufweist, **dadurch gekennzeichnet, dass** das Griffelement eine Grundplatte (30) aufweist, die eine bewegliche Klemmschiene (28) aufweist, die sich zwischen den Schenkeln (24) des Griffs erstreckt und eine federvorgespannte Position besitzt, in der blattförmige Gegenstände zwischen die Klemmschiene (28) und die Grundplatte (30) klemmbar sind, wobei der Griff mit der Klemmleiste (36) oder mit der Grundplatte (30) zu einer Baugruppe verbunden ist.

2. Griffelement nach Anspruch 1, **dadurch gekennzeichnet, dass** der Griff einstückig mit der Klemmleiste ausgebildet ist.

3. Griffelement nach Anspruch 1, **dadurch gekennzeichnet, dass** der Griff (20) einstückig mit der Grundplatte (30) ausgebildet ist.

4. Griffelement nach einem der Ansprüche 1 bis 3, **dadurch gekennzeichnet, dass** das bewegliche Verkleidungsteil eine Haube (16) für das Batteriefach ist.

5. Griffelement nach einem der Ansprüche 1 bis 4, **dadurch gekennzeichnet, dass** die Grundplatte (30) über Befestigungsmittel mit dem Verkleidungsteil (16) verbunden ist.

6. Griffelement nach einem der Ansprüche 1 bis 5, **dadurch gekennzeichnet, dass** die Klemmleiste über ein Federelement mit der Grundplatte (30) verbunden ist.

7. Griffelement nach einem der Ansprüche 1 bis 6, **dadurch gekennzeichnet, dass** die Klemmleiste (28) aus Metall hergestellt ist.

8. Griffelement nach einem der Ansprüche 1 bis 7, **dadurch gekennzeichnet, dass** die Grundplatte (30) aus Kunststoff hergestellt ist.

## Claims

1. A handle element for a movable cover part on an industrial truck (10) with a handle (20) having two legs (24) and a handle section (26) held between the legs, **characterized in that** the handle element has a base plate (30) that has a movable clamping rail (28) that extends between the legs (24) of the handle and has a spring-preloaded position in which sheet-shaped objects can be clamped between the clamping rail (28) and the base plate (30), wherein the handle is connected into an assembly with the clamping strip (36) or with the base plate (30) .

2. The handle element according to claim 1, **characterized in that** the handle is formed as a single part with the clamping strip.

3. The handle element according to claim 1, **characterized in that** the handle (20) is formed as a single part with the base plate (30).

4. The handle element according to one of claims 1 to 3, **characterized in that** the movable cover part is a cover (16) for the battery compartment.

5. The handle element according to one of claims 1 to 4, **characterized in that** the base plate (30) is connected to the cover part (16) by fastening means.

6. The handle element according to one of claims 1 to 5, **characterized in that** the clamping strip is connected to the base plate (30) by means of a spring element.

7. The handle element according to one of claims 1 to 6, **characterized in that** the clamping strip (28) is made of metal.

8. The handle element according to one of claims 1 to 7, **characterized in that** the base plate (30) is made of plastic.

## Revendications

1. Elément de poignée pour un élément d'habillage mobile sur un chariot de manutention (10) avec une poignée (20) qui présente deux côtés (24) et une partie de poignée (26) maintenue entre les côtés, **caractérisé en ce que** l'élément de poignée présente une plaque de base (30) présentant un rail de serrage (28) mobile qui s'étend entre les côtés (24) de la poignée et possède une position précontrainte à ressorts dans laquelle des objets en forme de lame peuvent être serrés entre le rail de serrage (28) et la plaque de base (30), la poignée étant reliée à la barre de serrage (36) ou à la plaque de base (30) pour former un ensemble.

2. Elément de poignée selon la revendication 1, **caractérisé en ce que** la poignée forme un élément d'un seul tenant avec la barre de serrage.

3. Elément de poignée selon la revendication 1, **caractérisé en ce que** la poignée (20) forme un élément d'un seul tenant avec la plaque de base (30).

4. Elément de poignée selon une des revendications 1 à 3, **caractérisé en ce que** l'élément d'habillage mobile est un couvercle (16) pour le compartiment batterie.

5. Elément de poignée selon une des revendications 1 à 4, **caractérisé en ce que** la plaque de base (30) est reliée par des moyens de fixation à l'élément d'habillage (16).

6. Elément de poignée selon une des revendications 1 à 5, **caractérisé en ce que** la barre de serrage est reliée par un élément de ressort à la plaque de base (30).

7. Elément de poignée selon une des revendications 1 à 6, **caractérisé en ce que** la barre de serrage (28) est fabriquée en métal.

8. Elément de poignée selon une des revendications 1 à 7, **caractérisé en ce que** la plaque de base (30) est fabriquée en plastique.
